# EUROPÄISCHE PATENTANMELDUNG

(11) **EP 4 559 369 A1**
(43) Veröffentlichungstag der Anmeldung: **28.05.2025**
(21) Anmeldenummer: 23211068.4
(22) Anmeldetag: 21.11.2023
(51) Int. Cl.: A47L 15/00, D06F 34/18, D06F 58/50, A47L 15/48, D06F 103/04, D06F 103/36, D06F 58/20, D06F 103/44, D06F 103/54, D06F 105/24, D06F 25/00

(54) **VERFAHREN ZUM INDIREKTEN MESSEN EINER BEEINTRÄCHTIGUNG EINES PROZESSLUFTSTROMS**

(71) Anmelder: BSH Hausgeräte GmbH, 81739 München (DE)
(72) Erfinder: Zarzycki, Adam, 93-487 Lodz (PL); Lohrmann, Andrea, 10555 Berlin (DE)

(57) **Zusammenfassung**

Die Erfindung betrifft ein Verfahren zum Ermitteln einer Beeinflussung eines Prozessluftstroms, wobei ein Elektromotor durch eine Motorsteuerung dazu angesteuert wird, ein Lüfterrad anzutreiben und einen Prozessluftstrom, insbesondere in einem Prozessluftkanal, zu er-zeugen, wobei eine Motorleistung des Elektromotors anhand von vorgegebenen oder gemessenen Motorparameters bestimmt wird, wobei basierend auf der Motorleistung ein Volumenstrom des Prozessluftstroms durch den Prozessluftkanal ermittelt wird, wobei der ermittelte Volumenstrom dazu eingesetzt wird, einen Druckverlust der Prozessluft zu bestimmen. Des Weiteren betrifft die Erfindung ein Verfahren zum Bestimmen eines Beladungsgrads einer Wäschetrommel und ein Haushaltsgerät.

## Beschreibung

Die vorliegende Erfindung betrifft ein Verfahren zum Ermitteln einer Beeinflussung eines Prozessluftstroms, wobei ein Elektromotor durch eine Motorsteuerung dazu angesteuert wird, ein Lüfterrad anzutreiben und den Prozessluftstrom, beispielsweise in einem Prozessluftkanal, zu erzeugen. Des Weiteren Betrifft die Erfindung ein Verfahren zum Ermitteln eines Beladungsgrads und ein Haushaltsgerät.

Der Beladungsgrad eines Wäschetrockners mit feuchten Textilien kann deutlich variieren und somit Einfluss auf ein Trocknungsprogramm haben. Geringere Beladungsmengen bzw. Beladungsgrade verursachen tendenziell einen geringeren Luftstromwiderstand für die Prozessluft gegenüber größeren Beladungsmengen. Wenn die Drehzahl des Lüfters zur Erzeugung eines Prozessluftstroms konstant gehalten wird, resultiert bei geringerer Beladungsmenge aufgrund des geringeren Luftstromwiderstands ein höherer Luftstrom. Dieser höhere Luftstrom geht auch mit einem gesteigerten Energieverbrauch einher. Diese Funktionsweise stellt einen Nachteil der bisher eingesetzten Wäschetrockner dar, bei welchen regulär die Wäschetrommel und der Lüfter von einem gemeinsamen Elektromotor angetrieben werden. Hierdurch kann die Drehgeschwindigkeit des Lüfters je nach Beladungsmenge nicht verändert werden.

Aber auch bei Wäschetrocknern mit separat ansteuerbaren Elektromotoren zum Antrieb des Lüfters muss in einem Schritt der Beladungsgrad der Wäschetrommel festgestellt werden, um eine anschließende Anpassung der Drehzahl des Lüfters umzusetzen. Es sind beispielsweise Verfahren bekannt, die eine Messung des Luftstroms mit Hilfe einer Differenzdruckmessung vor und nach einer Blende innerhalb des Prozessluftkanals durchführen. Weiterhin sind Verfahren bekannt, die einen Luftstrommesser verwenden, um einen Druckabfall durch Textilien innerhalb der Wäschetrommel zu detektieren. Derartige Verfahren erfordern jedoch Modifikationen der Wäschetrockner mit zusätzlichen Messgeräten und Auswerteeinheiten.

Die US 8,474,152 B2 beschreibt ein Verfahren zum Ermitteln eines Beladungszustands eines Wäschetrockners mit Hilfe einer Zeitserie aus Temperaturwerten. Wie bereits beschrieben sind auch bei diesem Verfahren der Einbau und eine komplexe Auswertung eines Temperatursensors über die Zeit erforderlich. Weiterhin sind Messungen der Temperatur aufgrund der dynamischen Bedingungen der Prozessluft in einem Wäschetrockner fehleranfällig.

Es ist daher die Aufgabe der vorliegenden Erfindung, ein kosteneffizientes Verfahren zum indirekten Ermitteln von Beeinflussungen eines Prozessluftkanals, wie beispielsweise durch einen Beladungsgrad einer Wäschetrommel, möglichst ohne grundlegende Modifizierungen eines Geräts zu ermitteln.

Diese Aufgabe wird durch ein Verfahren mit den Merkmalen des Anspruchs 1, durch ein Verfahren mit den Merkmalen des Anspruchs 7 und durch ein Haushaltsgerät mit den Merkmalen des Anspruchs gelöst.

Gemäß einem Aspekt der vorliegenden Erfindung wird ein Verfahren zum Ermitteln einer Beeinflussung eines Prozessluftstroms bereitgestellt. Ein Elektromotor wird durch eine Motorsteuerung dazu angesteuert, ein Lüfterrad anzutreiben und den Prozessluftstrom, beispielsweise in einem Prozessluftkanal zu erzeugen.

Der Prozessluftstrom kann generell in einem Haushaltsgerät erzeugt werden, welches gemäß einem weiteren Aspekt der Erfindung bereitgestellt wird und dazu eingerichtet ist, das erfindungsgemäße Verfahren auszuführen.

Das Haushaltsgerät kann beispielsweise als ein luftführendes Haushaltsgerät sein, welches wahlweise auch wasserführend ausgestaltet sein kann. Beispielsweise kann das Haushaltsgerät als ein Waschtrockner, ein Wäschetrockner, eine Geschirrspülmaschine, eine Waschmaschine mit einer Luftführung eines Prozessluftstroms, ein Dampfgarer, ein Backofen, ein Dunstabzug und dergleichen ausgestaltet sein.

Der erzeugte Prozessluftstrom kann hierbei in einem geschlossenen Kreislauf, wie beispielsweise bei Wäschetrockner, oder in einem offenen Kreislauf, beispielsweise bei einem Dunstabzug, durch das Lüfterrad gefördert werden. Ein Prozessluftkanal kann dabei ein Teil oder eine Gesamtheit eines derartigen Kreislaufs bilden. Dabei kann der Prozessluftkanal Teile des Kreislaufs, wie beispielsweise eine Wäschetrommel oder einen Behandlungsraum bzw. Reinigungsraum, umfassen oder diese zumindest fluidleitend koppeln.

Eine Motorleistung des Elektromotors wird anhand von ermittelten und/oder gemessenen Motorparametern bestimmt. Dies kann durch die Motorsteuerung erfolgen, die beispielsweise als ein sogenannter PWM, Inverter und dergleichen ausgestaltet sein kann. Basierend auf der Motorleistung wird ein Volumenstrom des Prozessluftstroms durch den Prozessluftkanal ermittelt. Der ermittelte Volumenstrom wird anschließend dazu eingesetzt, einen Druckverlust der Prozessluft zu bestimmen.

Durch das Verfahren kann eine indirekte Messung des Volumenstroms der Prozessluft realisiert werden, welcher beispielsweise während eines Trocknungsprogramms eines Wäschetrockners oder Waschtrockners erzeugt wird. Dabei kann auch der Druckverlust durch die beladene Wäsche bzw. Textilien ermittelt werden. Je nach Ausgestaltung kann der Druckverlust als Indikator für eine Beeinträchtigung des Prozessluftstroms herangezo0gen werden. Mit einem zunehmenden Druckverlust kann von einer stärkeren Beeinträchtigung ausgegangen werden.

Die Beeinträchtigung kann im Rahmen einer üblichen Funktionsweise des Haushaltsgeräts oder im Rahmen einer unüblichen Funktionsweise des Haushaltsgeräts auftreten. Beispielsweise kann der resultierende Druckverlust durch eine Verschmutzung oder eine Beschädigung eines Prozessluftkanals bzw. von Luftwegen als eine unübliche Funktionsweise des Haushaltsgeräts eingestuft werden. Ein Druckverlust aufgrund einer Beladung der Wäschetrommel mit Textilien kann hierbei als eine Beeinträchtigung im Rahmen einer üblichen Funktionsweise des Haushaltsgeräts eingestuft werden.

Vorteilhafterweise wird der Elektromotor zum Antreiben des Lüfterrads, welches als ein Axiallüfterrad oder als ein Radiallüfterrad ausgestaltet sein kann, durch eine eigene Motorsteuerung angesteuert werden. Dabei kann die Motorsteuerung auch Bestandteil oder Modul einer zentralen Steuereinheit sein. Der Elektromotor kann beispielsweise ein bürstenloser Gleichstrommotor sein. Die Motorsteuerung kann somit eine Drehzahl oder Drehgeschwindigkeit des Elektromotors vorgeben oder ermitteln. Dies kann im Rahmen des Betriebs des Haushaltsgeräts im Hintergrund umgesetzt werden.

Im Vergleich zu anderen Methoden der Messung des Luftstroms bzw. des Volumenstroms erfordert das erfindungsgemäße Verfahren keine zusätzlichen Sensoren. Es werden lediglich die Daten bzw. Informationen der Motorsteuerung verwendet, um den Volumenstrom und den Druckverlust indirekt zu bestimmen. Durch das Verfahren kann eine Messung des Volumenstroms und des Druckverlusts besonders kosteneffizient implementiert werden.

Gemäß einem Ausführungsbeispiel werden die Motorparameter des Elektromotors in Form von einer Motorspannung, eines Motorstroms und einer Drehzahl des Elektromotors ermittelt und/oder gemessen. Diese Messdaten oder Vorgaben können technisch besonders einfach im Rahmen der Steuerung des Elektromotors ermittelt und ausgelesen werden.

Nach einer weiteren Ausführungsform wird der Volumenstrom basierend auf den Motorparametern mit Hilfe einer Formel und/oder einer Vergleichstabelle ermittelt. Durch diese Maßnahme kann eine im Vorfeld erstellte Vergleichstabelle bzw. eine sogenannte Lookup-Tabelle oder eine entsprechend abgeleitete oder angenäherte Formel genutzt werden, welche einen Zusammenhang zwischen den Motorparametern, beispielsweise einer Motorleistung, und dem Volumenstrom des erzeugten Prozessluftstroms herstellen. Hierdurch kann der Volumenstrom technisch besonders einfach bestimmt werden.

Gemäß einem weiteren Ausführungsbeispiel wird der Druckverlust in Abhängigkeit von dem ermittelten Volumenstrom und einer zuvor bestimmten Drehzahl des Motors durch eine Formel und/oder eine Vergleichstabelle bestimmt. Dabei können eine oder mehrere Vergleichstabellen in Form von Lookup-Tabellen oder näherungsweisen Formeln für eine technisch einfache Ermittlung des Druckverlusts verwendet werden.

Nach einer weiteren Ausführungsform wird eine Drehzahl des Elektromotors ermittelt. Alternativ wird die Drehzahl des Elektromotors vorgegeben. Mindestens eine Vergleichstabelle und/oder mindestens eine Spalte oder Zeile einer Vergleichstabelle und/oder eine Formel wird in Abhängigkeit von der Drehzahl ausgewählt, um den Volumenstrom und/oder den Druckverlust zu ermitteln. Bedingt durch die physikalischen Zusammenhänge sind die Abhängigkeiten zwischen den Motorparametern und dem Volumenstrom sowie dem Druckverlust deutlich von der Drehzahl des Elektromotors bzw. des Lüfterrads abhängig. Somit können Vergleichstabellen oder Formeln für vordefinierte und konstante Drehzahlen bestimmt und in der Motorsteuerung oder einem anderen Speicher des Haushaltsgeräts oder in einem externen Speicher, wie beispielsweise einer Cloud, hinterlegt werden. Basierend auf der angesteuerten Drehzahl des Elektromotors kann eine hierfür spezifische grafische Kurve bzw. Tabelle oder Formel ausgewählt und anschließend für eine besonders präzise Ermittlung des Volumenstroms und des Druckverlusts verwendet werden.

Gemäß einem weiteren Ausführungsbeispiel wird die mindestens eine Vergleichstabelle, mindestens eine Spalte oder Zeile einer Vergleichstabelle und/oder die mindestens eine Formel im Vorfeld im Rahmen einer initialen Messreihe erstellt. Somit kann für ein bestimmtes Modell oder eine Serie von Haushaltsgeräten eine oder mehrere Kurven oder Tabellen initial erstellt werden, welche anschließend im Betrieb genutzt werden können, um indirekte Ermittlung von Volumenströmen und Druckverlusten ohne spezifische Sensoren vorzunehmen.

Nach einem weiteren Aspekt der Erfindung wird ein Verfahren zum Bestimmen eines Beladungsgrads einer Wäschetrommel bereitgestellt. Ein Elektromotor wird durch eine Motorsteuerung dazu angesteuert, ein Lüfterrad anzutreiben und einen Prozessluftstrom im Prozessluftkanal zu erzeugen. Der Prozessluftkanal weist eine Wäschetrommel auf oder kann eine Wäschetrommel fluidführend verbinden. Ein Volumenstrom des Prozessluftstroms durch den Prozessluftkanal wird gemessen oder basierend auf ermittelten und/oder vorgegebenen Motorparametern ermittelt. Anhand des ermittelten Volumenstroms wird anschließend direkt oder indirekt ein Druckverlust des Prozessluftstroms bei einem Passieren des Prozessluftkanals, insbesondere der Wäschetrommel, ermittelt. Basierend auf dem Volumenstrom und dem Druckverlust wird eine Kurve oder ein Wertebereich ausgewählt. In Abhängigkeit von der ausgewählten Kurve oder dem, ausgewählten Wertebereich wird ein Beladungsgrad der Wäschetrommel ermittelt.

Dabei können mehrere Kurven im Rahmen einer Kalibrierung oder initialen Messung ermittelt werden, welche einen mathematischen Zusammenhang zwischen einem Beladungsgrad, dem Volumenstrom und dem Druckverlust herstellen. Insbesondere können unterschiedliche grafische Kurven oder Regressionen bereitgestellt werden, welche aufgrund unterschiedlichen Beladungsgrads entlang einer Druckachse voneinander beabstandet sind. Eine Schnittbildung zwischen dem ermittelten Volumenstrom und dem ermittelten Druckverlust kann somit auf eine der mehreren grafischen Kurven deuten, die jeweils einen Beladungsgrad der Wäschetrommel indizieren können.

Durch das Verfahren kann ein Beladungsgrad eines Wäschetrockners oder Waschtrockners technisch besonders einfach und ohne zusätzliche Sensoren oder Modifikationen bestimmt werden.

Bei einem Ausführungsbeispiel wird der Beladungsgrad der Wäschetrommel in Form einer nicht beladenen Wäschetrommel oder in Form einer mit Textilien beladenen Wäschetrommel ermittelt. Durch diese Maßnahme kann eine Kurve oder ein Wertebereich als ein Grenzwert zwischen einer beladenen Wäschetrommel und einer nicht beladenen bzw. leeren Wäschetrommel fungieren. Diese Maßnahme ermöglicht eine technisch besonders einfache und robuste Feststellung von Textilien innerhalb der Wäschetrommel.

Nach einer weiteren Ausführungsform wird der Beladungsgrad der Wäschetrommel in prozentualer Form einer maximal möglichen Beladung durch Textilien oder in Form eines Gewichts der Textilien in der Wäschetrommel ermittelt. Hierdurch können mehrere grafische Kurven im Rahmen einer initialen Messung aufgezeichnet werden. Die Anzahl der ermittelten Kurven oder Wertebereiche kann hierbei eine Genauigkeit oder Abstufung der möglichen Beladungsgrade darstellen.

Die Vorteile und Merkmale, die oben im Zusammenhand mit der Vorrichtung erläutert wurden, gelten analog auch für das Verfahren und andersherum. Einzelne Merkmale oder Aspekte der vorliegenden Erfindung können miteinander kombiniert werden und haben die in diesem Zusammenhang erläuterten Vorteile.

Im Folgenden wird die Erfindung anhand von vorteilhaften Ausführungsformen mit Bezug auf die beigefügten Figuren im Detail erläutert. Dabei zeigen:
- Fig. 1: eine Frontansicht eines Haushaltsgeräts gemäß einer Ausführungsform.
- Fig. 2: ein schematisches Ablaufdiagramm zum Veranschaulichen eines Verfahrens zum Ermitteln einer Beeinflussung eines Prozessluftstroms gemäß einer Ausführungsform.
- Fig. 3: ein schematisches Druckverlust-Volumenstrom-Diagramm und ein Motorleistung-Volumenstrom-Diagramm zum Veranschaulichen von Schritten des in Fig. 2 beschriebenen Verfahrens.
- Fig. 4: ein schematisches Druckverlust-Volumenstrom-Diagramm zum Ermitteln eines Beladungsgrads eines Haushaltsgeräts.

In den Figuren sind gleiche oder einander entsprechende Elemente mit den gleichen Bezugszeichen gekennzeichnet. Faktoren wie beispielsweise numerische Werte, Formen, Komponenten, Positionen von Komponenten und die Weise, wie die Komponenten miteinander verbunden sind, sind lediglich illustrativ und nicht einschränkend. In den Zeichnungen sind aus Gründen der Übersicht und zur Verbesserung der Erkennbarkeit teilweise unterschiedliche Maßstäbe verwendet.

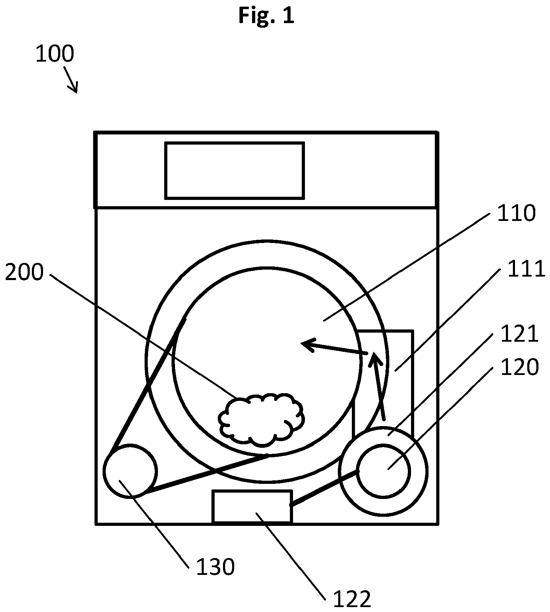

Fig. 1 zeigt eine Frontansicht eines Haushaltsgeräts 100 gemäß einer Ausführungsform. Das dargestellte Ausführungsbeispiel zeigt ein Das Haushaltsgerät 100 in Form eines Wäschetrockners.

Das Haushaltsgerät 100 weist eine Wäschetrommel 110 auf. Die Wäschetrommel 110 ist Bestandteil eines geschlossenen Kreislaufs, welchen ein Prozessluftstrom durchlaufen kann. Dabei weist das Haushaltsgerät 100 einen ersten Elektromotor 120 auf. Der erste Elektromotor 120 treibt ein Lüfterrad 121 an und wird durch eine Motorsteuerung 122 angesteuert. Hierzu kann der erste Elektromotor 120 als ein bürstenloser Gleichstrommotor ausgestaltet sein. Die Motorsteuerung 122 kann beispielsweise als ein Inverter ausgeführt sein. Darüber hinaus kann die Motorsteuerung 122 dazu eingerichtet sein, Motorparameter des Elektromotors 120 bzw. ersten Elektromotors 120 zu ermitteln und/oder vorzugeben, um den Elektromotor 120 entsprechend der Motorparameter anzusteuern. Zu den Motorparametern können eine Drehzahl bzw. Frequenz, eine Motorspannung, ein Motorstrom, eine Motortemperatur und dergleichen zählen.

Das Lüfterrad 121 kann beispielsweise als ein Radiallüfterrad geformt sein. Der durch den Antrieb des Lüfterrads 121 erzeugte Prozessluftstrom ist durch den Pfeil andeutet und kann über einen Prozessluftkanal 111 in die Wäschetrommel 110 gelangen.

Ein weiterer Elektromotor bzw. Antriebsmotor 130 ist vorgesehen, um die Wäschetrommel 110 zu rotieren und somit in die Wäschetrommel 110 eingelegten Textilien 200 zu bewegen bzw. umzuwälzen.

Der erzeugte Prozessluftstrom kann dabei vor dem Passieren der Wäschetrommel 110 durch Abkühlen entfeuchtet und anschließend erwärmt werden, um die Feuchtigkeit der Textilien 200 schneller aufnehmen zu können. Die jeweiligen Wärmetauscher oder Umgebungswärmeübertrager, Luftkanäle, Leitungen und dergleichen sind der Übersicht halber nicht gezeigt.

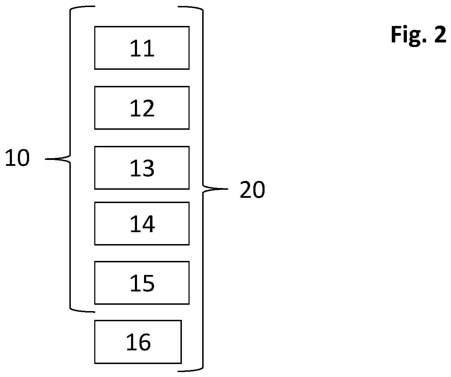

Die Fig. 2 zeigt ein schematisches Ablaufdiagramm zum Veranschaulichen eines Verfahrens 10 zum Ermitteln einer Beeinflussung eines Prozessluftstroms gemäß einer Ausführungsform. Dabei können die Schritte 11 - 15 des Verfahrens dazu eingesetzt werden, die Beeinflussung eines Prozessluftstroms zu bestimmen. In einem optionalen Schritt 16 kann ein Verfahren zum Bestimmen eines Beladungsgrads einer Wäschetrommel 110 gemäß einer Ausführungsform realisiert werden.

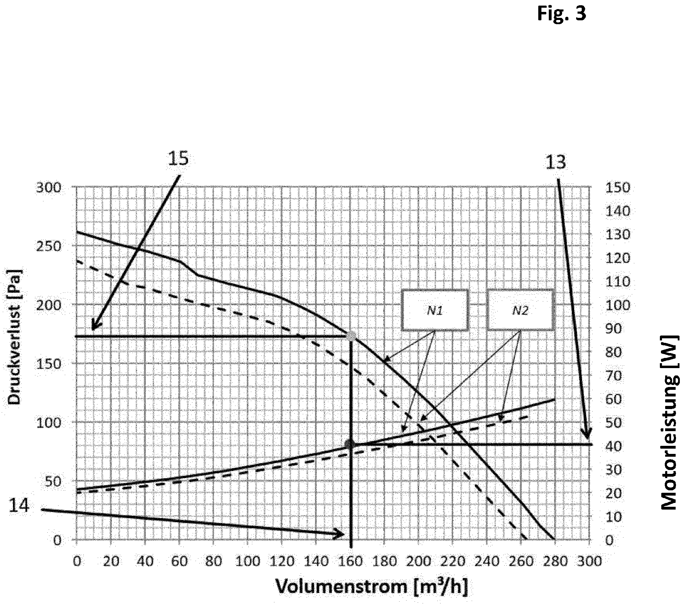

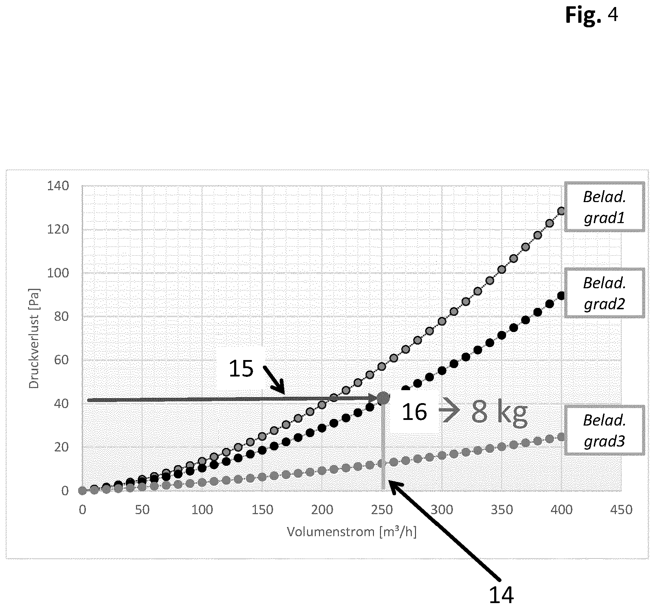

In der Fig. 3 ist ein schematisches Druckverlust-Volumenstrom-Diagramm und ein Motorleistung-Volumenstrom-Diagramm zum Veranschaulichen von Schritten des in Fig. 2 beschriebenen Verfahrens 10 gezeigt. Dabei sind die Schritte 13, 14 und 15 des Verfahrens 10 in dem in Fig. 3 gezeigten Diagramm und die Schritte 14, 15 und 16 in dem in Fig. 4 gezeigten Diagramm visualisiert.

Beispielhaft wird das Verfahren 10 durch das in Fig. 1 gezeigte Haushaltsgerät 100 durchgeführt.

Es sind schematisch ein Druckverlust-Volumenstrom-Diagramm und ein Motorleistung-Volumenstrom-Diagramm mit jeweils zwei Kurven für unterschiedliche Drehzahlen N des Elektromotors 120 gezeigt. Dabei sind die Kurven beispielhaft für zwei Drehzahlen visualisiert, wobei die Drehzahl N1 größer ist als die Drehzahl N2..

Im ersten Schritt 11 des Verfahrens 10 wird die durch die Motorsteuerung 122 eingestellte Drehzahl ausgelesen. Im gezeigten Ausführungsbeispiel, um das Verfahren 10 zu verdeutlichen, wird eine Drehzahl N1 verwendet.

In einem nächsten Schritt 12 werden die relevanten Kurven für die eingestellte und ausgelesene Drehzahl ausgewählt. Die Pfeile veranschaulichen die gewählten Kurven bzw. Datensätze. Die entsprechenden Datensätze können auch in Form von Formeln, Regressionen und/oder Vergleichstabellen vorliegen. Diese können in der Motorsteuerung 122 oder in einer beliebigen geräteinternen oder geräteexternen Steuereinheit und/oder Speichereinheit hinterlegt sein.

In einem weiteren Schritt 13 des Verfahrens 10 werden die Motorparameter, wie Motorstrom und Motorspannung, ausgelesen, um die Motorleistung P zu bestimmen. Im gezeigten Ausführungsbeispiel wird eine Motorleistung von 40W ermittelt. Anhand des Motorleistung-Volumenstrom-Diagramms wird in einem Schritt 14 des Verfahrens 10 ein Volumenstrom von 160 m³/h für den durch das Lüfterrad 121 erzeugten Prozessluftstrom ermittelt. Alternativ kann zum Ermitteln des Volumenstroms auch ein Durchflusssensor verwendet werden, um eine Messung durchzuführen.

Basierend auf dem ermittelten Volumenstrom und dem hinterlegten Druckverlust-Volumenstrom-Diagramm kann in einem weiteren Schritt 15 der Druckverlust bestimmt werden. Im gezeigten Ausführungsbeispiel wird ein Druckverlust von 175 Pa ermittelt. Dieser Druckverlust resultiert aufgrund einer Beeinträchtigung des Prozessluftstroms innerhalb des offenen oder geschlossenen Kreislaufs.

Die Fig. 4 zeigt ein schematisches Druckverlust-Volumenstrom-Diagramm zum Ermitteln eines Beladungsgrads eines Haushaltsgeräts 100. Das Diagramm dient zum Veranschaulichen eines Verfahrens 20 zum Bestimmen eines Beladungsgrads einer Wäschetrommel 110 gemäß einer Ausführungsform. Hierbei wird ebenfalls das in Fig. 1 gezeigte Haushaltsgerät 100 zum Veranschaulichen des Verfahrens 20 eingesetzt.

Zum Durchführen des Verfahrens wird ein Datensatz verwendet, welcher mehrere Kurven oder Datensätze eines Druckverlust-Volumenstrom-Diagramms (s. Fig. 4) aufweist. Dabei deuten die jeweiligen Kurven auf unterschiedliche Beladungsgrade der Wäschetrommel 110. Im gezeigten Ausführungsbeispiel sind die Beladungsgrade in Form von Gewicht der feuchten Textilien 200 ausgestaltet. Beispielhaft ist eine Druckverlust-Volumenstrom-Kurve für drei verschiedene Beladungsgrade dargestellt. Mit zunehmendem Beladungsrad steigt auch der Druckverlust und somit der Abstand der Kurven mit zunehmendem Volumenstrom voneinander entlang der Y-Achse bzw. der Druckverlust-Achse.

In einem Schritt 11-13 des Verfahrens 20 wird der Elektromotor 120 durch die Motorsteuerung 122 dazu angesteuert, das Lüfterrad 121 anzutreiben und einen Prozessluftstrom im Prozessluftkanal 111 zu erzeugen. Der Volumenstrom des Prozessluftstroms durch den Prozessluftkanal 111 wird gemessen oder basierend auf ermittelten und/oder vorgegebenen Motorparametern ermittelt 14. Der Volumenstrom kann hierbei analog zum in Fig. 2 beschriebenen Verfahren 10 ermittelt werden. Im gezeigten Ausführungsbeispiel wird ein Volumenstrom von 250 m³/h bestimmt.

Anhand des ermittelten Volumenstroms wird bei einem weiteren Schritt 15 direkt oder indirekt ein Druckverlust des Prozessluftstroms bei einem Passieren des Prozessluftkanals 111, insbesondere der Wäschetrommel 110, ermittelt.

Basierend auf dem Volumenstrom und dem Druckverlust wird in einem weiteren Schritt 16 ein Schnittpunkt in dem Druckverlust-Volumenstrom-Diagramm aufgezeigt, welcher auf die mittlere Druckverlust-Volumenstrom-Kurve bzw. in einen Wertebereich der Druckverlust-Volumenstrom-Kurve für einen Beladungsgrad von 8 kg fällt. Somit entspricht der ermittelte Beladungsgrad der Wäschetrommel 110 8 kg.

### Bezugszeichenliste

- 100 -: Haushaltsgerät
- 110 -: Wäschetrommel
- 111 -: Prozessluftkanal
- 120 -: Elektromotor
- 121 -: Lüfterrad
- 122 -: Motorsteuerung
- 130 -: Antriebsmotor

- 200 -: Textilien

- 10 -: Verfahren zum Ermitteln einer Beeinflussung eines Prozessluftstroms
- 11 -: Drehzahl ausgelesen
- 12 -: Kurven oder Datensatz auswählen
- 13 -: Motorparameter auslesen
- 14 -: Volumenstrom ermitteln
- 15 -: Druckverlust ermitteln

- 20 -: Verfahren zum Bestimmen eines Beladungsgrads
- 16 -: Auswählen eines Wertebereichs und Bestimmen eines Beladungsgrads

## Patentansprüche

1. Verfahren (10) zum Ermitteln einer Beeinflussung eines Prozessluftstroms, wobei ein Elektromotor (120) durch eine Motorsteuerung (122) dazu angesteuert wird, ein Lüfterrad (121) anzutreiben und einen Prozessluftstrom, insbesondere in einem Prozessluftkanal, zu erzeugen, wobei eine Motorleistung des Elektromotors (120) anhand von ermittelten und/oder gemessenen Motorparametern bestimmt wird, wobei basierend auf der Motorleistung ein Volumenstrom des Prozessluftstroms durch den Prozessluftkanal (111) ermittelt wird, wobei der ermittelte Volumenstrom dazu eingesetzt wird, einen Druckverlust des Prozessluftstroms zu bestimmen.

2. Verfahren nach Anspruch 1, wobei die Motorparameter des Elektromotors (120) in Form von einer Motorspannung, eines Motorstroms und einer Drehzahl des Elektromotors (120) ermittelt und/oder gemessen werden.

3. Verfahren nach Anspruch 1 oder 2, wobei der Volumenstrom basierend auf den Motorparametern mit Hilfe einer Formel und/oder einer Vergleichstabelle ermittelt wird.

4. Verfahren nach einem der Ansprüche 1 bis 3, wobei der Druckverlust in Abhängigkeit von dem ermittelten Volumenstrom und einer zuvor bestimmten Drehzahl des Elektromotors (120) durch eine Formel und/oder eine Vergleichstabelle bestimmt wird.

5. Verfahren nach einem der Ansprüche 1 bis 4, wobei eine Drehzahl des Elektromotors (120) ermittelt oder vorgegeben wird, wobei mindestens eine Vergleichstabelle, mindestens eine Spalte oder Zeile einer Vergleichstabelle und/oder eine Formel in Abhängigkeit von der Drehzahl ausgewählt wird, um den Volumenstrom und/oder den Druckverlust zu ermitteln.

6. Verfahren nach Anspruch 5, wobei die mindestens eine Vergleichstabelle, mindestens eine Spalte oder Zeile einer Vergleichstabelle und/oder die mindestens eine Formel im Vorfeld im Rahmen einer initialen Messreihe erstellt wird.

7. Verfahren (20) zum Bestimmen eines Beladungsgrads einer Wäschetrommel (110), wobei ein Elektromotor (120) durch eine Motorsteuerung (122) dazu angesteuert wird, ein Lüfterrad (121) anzutreiben und einen Prozessluftstrom im Prozessluftkanal (111) zu erzeugen, wobei der Prozessluftkanal (111) eine Wäschetrommel (110) aufweist oder mit einer Wäschetrommel (110) verbunden ist, wobei ein Volumenstrom des Prozessluftstroms durch den Prozessluftkanal (111) gemessen oder basierend auf ermittelten und/oder vorgegebenen Motorparametern ermittelt wird, wobei anhand des ermittelten Volumenstroms direkt oder indirekt ein Druckverlust des Prozessluftstroms ermittelt wird, wobei basierend auf dem Volumenstrom und dem Druckverlust eine Kurve oder ein Wertebereich ausgewählt wird, wobei durch die Kurve oder den Wertebereich ein Beladungsgrad der Wäschetrommel (110) ermittelt wird.

8. Verfahren nach Anspruch 7, wobei der Beladungsgrad der Wäschetrommel (110) in Form einer nicht beladenen Wäschetrommel (110) oder in Form einer mit Textilien (200) beladenen Wäschetrommel (110) ermittelt wird.

9. Verfahren nach Anspruch 7 oder 8, wobei der Beladungsgrad der Wäschetrommel (110) in prozentualer Form einer maximal möglichen Beladung durch Textilien (200) oder in Form eines Gewichts der Textilien (200) in der Wäschetrommel (110) ermittelt wird.

10. Haushaltsgerät (100), welches dazu eingerichtet ist, zumindest eines der Verfahren (10, 20) gemäß einem der vorhergehenden Ansprüche auszuführen.
